Europäisches Patentamt

European Patent Office

Office européen des brevets

(11) Publication number: **0 393 303**
**A2**

## EUROPEAN PATENT APPLICATION

(21) Application number: **90100259.2**

(51) Int. Cl.5: **F16L 37/10**

(22) Date of filing: **08.01.90**

(30) Priority: **21.04.89 IT 2026389**

(43) Date of publication of application:
**24.10.90 Bulletin 90/43**

(84) Designated Contracting States:
**AT BE CH DE DK ES FR GB GR LI LU NL SE**

(71) Applicant: **Fini, Luigi**
**Via Boccaccio 182**
**I-20099 Sesto S. Giovanni (Milano)(IT)**

(72) Inventor: **Fini, Luigi**
**Via Boccaccio 182**
**I-20099 Sesto S. Giovanni (Milano)(IT)**

(74) Representative: **Forattini, Amelia et al**
**c/o Internazionale Brevetti Ingg. ZINI,**
**MARANESI & C. S.r.l. Piazza Castello 1**
**I-20121 Milano(IT)**

(54) Pipe fitting, particularly for lines of food processing plants.

(57) The pipe fitting includes a first element (2) associable with the end of a first pipe and a second element (3) associable with the end of a second pipe to be connected to said first pipe; the first element and the second element include release and fastening means constituted by a sleeve (5) associated with the first element and associable with the second element; a gasket (4) is interposed between the first element and the second element, and the first element and the second element are obtained by pressing from a rolled tube.

Fig. 1

# PIPE FITTING, PARTICULARLY FOR LINES OF FOOD PROCESSING PLANTS

The present invention relates to a pipe fitting, particularly for lines of food processing plants.

In the food industry, the plant pipes are generally joined by means of threaded fittings constituted by two flanged elements fixed to the ends of the pipes to be joined; a gasket is interposed between the flanges and is pressed by means of bolts.

Said fittings, usually of the expanded type, have been in use for a long time and have good mechanical characteristics, but are affected by some important disadvantages.

Known threaded fittings are first of all rather expensive and heavy, because of the manner in which they are manufactured; the elements by which they are constituted are in fact obtained from solid forged or cast parts and are subsequently worked on machine tools.

The elements are then fixed to the respective pipes generally by expanding or welding.

Since the elements of known fittings are obtained by pressing a forged piece, the longitudinal extension of the cylindrical portion to be welded to the pipe is small; this precludes the automatic welding to the tube during the construction of the plant.

The aim of the present invention is to provide a pipe fitting, particularly for lines of food processing plants, which has an extremely reduced weight and manufacturing cost, with respect to known ones.

Within the scope of the above described aim, an object of the invention is to provide a fitting with improved mechanical and hygienic characteristics, in particular one which is easy to assemble and keeps perfectly clean internally during use.

Not least object of the invention is to provide a fitting which allows the automatic welding of pipes during the construction of the plant.

The above aim, as well as these and other objects that will be more apparent hereinafter, are achieved by a pipe fitting, particularly for food system lines, comprising a first element associable with the end of a first pipe and a second element associable with the end of a second pipe to be connected to said first pipe, said first element and said second element comprising release and fastening means, characterized in that said release and fastening means comprise a sleeve associated with said first element and associable with said second element, a gasket being interposed between said first element and said second element, said first element, said second element and said sleeve being made by pressing from a rolled tube.

Further characteristics and advantages of the invention will be more apparent by the following description of an embodiment of the invention, illustrated, by way of example, in the enclosed drawings in which:

figure 1 is an exploded isometric view of the fitting according to the invention;

figure 2 is a partially sectioned exploded side view of the fitting;

figure 3 is an enlarged sectional view of the coupling region of the elements of the assembled fitting.

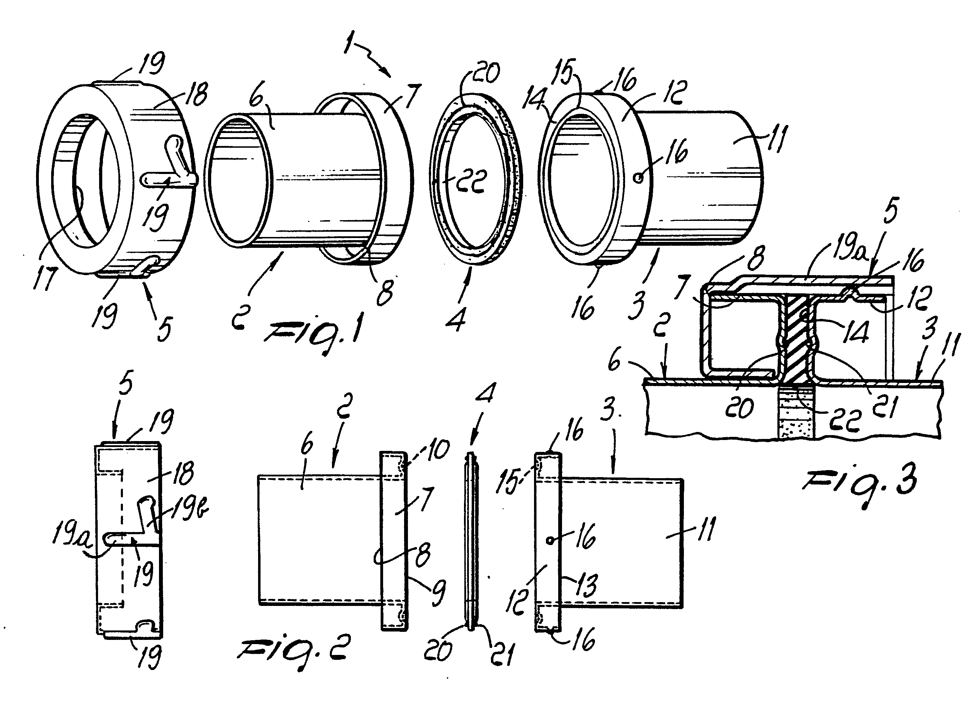

With reference to the above described figures, the fitting, generally indicated by the reference numeral 1, comprises a first element 2 and a second element 3 between which a gasket 4 is interposed; said elements are locked by a sleeve 5.

The first element 2 comprises a first cylindrical portion 6 and a first flange 7 folded in the shape of a U; the flange 7 is provided with a rear edge 8 and with a front side 9 on which a first annular recess 10 is provided.

The second element 3 comprises a second cylindrical portion 11 and a second U-shaped flange 12; said flange 12 has a rear edge 13 and a front side 14 on which a second annular recess 15 is provided.

The second flange 12 of the second element is furthermore provided with raised portions 16 with a preferably hemispherical configuration.

The sleeve 5 has a U-shaped rear edge 17, adapted to abut and engage the rear edge 8 of the first element 2, and a cylindrical portion 18 provided with grooves 19 adapted to engage the raised portions 16.

Each of said grooves 19 advantageously has a longitudinal portion 19a and a diagonal portion 19b so as to define, in co-operation with the raised portions 16, a bayonet coupling in a per se known manner.

The gasket 4 has, on each side which is in contact with the front sides 9 and 14 of the elements 2 and 3, an annular raised portion 20, 21 with a substantially hemispherical cross section which inserts in the respective annular recesses 10 and 15 of the elements 2 and 3.

Furthermore, the inner edge 22 of the gasket 4 is widened so as to follow the radiused profile of the connecting region between the flanges 7, 12 and the respective portions 6, 11 of the elements 2, 3; in this manner, when the fitting is assembled, the inner surface of the fitting itself has no steps but is completely smooth.

The operation of the fitting 1 is apparent; it is in fact sufficient to move the elements 2, 3 toward one another after interposing the gasket 4, and then fix them by inserting the sleeve 5 on the first element 2, locking it on the second element 3 with a bayonet-like coupling.

The ends of the pipes can be subsequently welded automatically to the respective cylindrical portions 6, 11.

The elements 2 and 3 and the sleeve 5 can be obtained from rolled tubes by means of progressive pressing operations, without requiring further machining on machine tools.

The materials used for said elements are those normally used for food plants or the like, preferably stainless steels, for example AISI 304, 304L, 316, 316L.

The gasket 4 can be made of synthetic materials, for example of the types commercially known as "TEFLON" or "VITON".

The fitting 1 is particularly suitable for use in food processing industry, but it is naturally also suitable for other uses, such as for example for the pharmaceutical or cosmetic industry and wherever particular hygienic and sanitary conditions are required.

In practice it has been observed that the invention achieves the intended aim and objects by providing a fitting which can be obtained with extremely reduced production costs with respect to known fittings.

An important advantage of the invention resides in that the weldings can be performed automatically during the application of the fitting in a plant, since the cylindrical portion for connecting each element of the fitting to the respective pipe can be made of the appropriate length for automatic welding.

In known fittings, the elements are in fact obtained by pressing from forged pieces and therefore have limited longitudinal dimensions; on the contrary, the elements of the fitting according to the invention are obtained from rolled tubes and therefore with no limitations regarding the length of the cylindrical connecting portion.

Another advantage of the invention is due to the total absence of steps inside the fitting, which is easy to clean, this being an essential characteristic in food systems. The fitting according to the invention may have numerous modifications and variations, all within the inventive concept; furthermore, all the details may be substituted with technically equivalent elements.

The materials employed, as well as the dimensions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Pipe fitting, particularly for lines of food processing plants, comprising a first element (2) associable with the end of a first pipe and a second element (3) associable with the end of a second pipe to be connected to said first pipe, said first element and said second element comprising release and fastening means, characterized in that said release and fastening means comprise a sleeve (5) associated with said first element and associable with said second element, a gasket (4) being interposed between said first element and said second element, said first element, said second element and said sleeve being made by pressing from a rolled tube.

2. Pipe fitting, according to claim 1, characterized in that said first element (2) comprises a first cylindrical portion (6) and a U-shaped first flange (7), said first flange having a rear edge (8) and a front side (9) on which an annular recess (10) is provided.

3. Pipe fitting, according to claim 1, characterized in that said second element (3) comprises a second cylindrical portion (11) and a U-shaped second flange (12), said second flange having a second rear edge (13) and a second front side (14) on which a second annular recess (14) is provided.

4. Pipe fitting, according to one or more of the preceding claims, characterized in that said second flange (12) of said second element is furthermore provided with raised portions (16), said sleeve (5) having a U-shaped folded rear edge (17), adapted to abut and engage said rear edge of said first element, and a cylindrical portion (18) provided with grooves (19) adapted to engage said raised portions, each of said grooves having a longitudinal portion (19a) and a diagonal portion (19b) to provide a bayonet-like coupling, in co-operation with said raised portions.

5. Pipe fitting, according to one or more of the preceding claims, characterized in that said gasket (5) has, on each side which is in contact with said front sides of said elements, an annular raised portion (20,21) having a substantially hemispherical cross section, said annular raised portion being adapted to insert in the corresponding recess of the annular recesses (10,15) of said elements.

6. Pipe fitting, according to one or more of the preceding claims, characterized in that said inner edge (22) of said gasket is widened so as to follow the radiused profile of the region of coupling between said flanges (7,12) and said respective cylindrical portions (6,11) of said elements.

19 18 6 7 1 20 15 16 12
17 19 14 16 11
19 5 8 16
2 22 16
4 3

*Fig.1*

5 19a 16
8 12
7 14
6 3
2 11
20 22 21

*Fig.3*

5 2 4 3
19 6 10 16
18 7 15 16
19b 8 16 11
19a 9 13
19 12 16
20 21 16

*Fig.2*

EP 0 393 303 A2